# EUROPÄISCHE PATENTSCHRIFT

(11) **EP 1 486 371 B1**
(45) Veröffentlichungstag und Bekanntmachung des Hinweises auf die Patenterteilung: **11.04.2018**
(21) Anmeldenummer: 04013679.8
(22) Anmeldetag: 09.06.2004
(51) Int. Cl.: B60L 11/18

(54) **Flurförderzeug**
Industrial truck
Chariot de manutention

(30) Priorität: 11.06.2003 DE 10326309
(43) Veröffentlichungstag der Anmeldung: 15.12.2004
(73) Patentinhaber: STILL GmbH, 22113 Hamburg (DE); STILL SAS, 77716 Marne La Vallée Cedex 4 (FR)
(72) Erfinder: Brouart, Francois, 60280 Margny les Compiegne (FR); Ferreira, Paulo, 60870 Rieux (FR); Günther, Lars, 68159 Mannheim (DE); Krupka, Daniel, 60170 Cambronne (FR); Leifert, Torsten, Dr., 21360 Vögelsen (DE)
(74) Vertreter: Patentship Patentanwaltsgesellschaft mbH

(56) Entgegenhaltungen:
- EP-A1- 0 841 208
- DE-A1- 4 211 230
- DE-U1- 20 202 143
- JP-A- H 104 601
- US-A- 5 656 919
- US-A- 5 963 140
- US-A1- 2004 100 225
- US-B1- 6 313 832

## Beschreibung

Die Erfindung betrifft ein Flurförderzeug mit einem mitgeführten Energiespeicher und mindestens einem daraus mit Energie versorgten Antrieb. Derartige Flurförderzeuge gibt es in verschiedenen Ausbildungsformen, beispielsweise als Gabelstapler oder Hubwagen, mit einem elektrischen oder einem verbrennungsmotorischen Antrieb, mit einem Energiespeicher in Form einer Batterie oder eines Tanks für flüssige und/oder gasförmige Brennstoffe. Die Energie aus dem Energiespeicher kann direkt im Antrieb umgesetzt werden, beispielsweise bei einem elektromotorischen Antrieb, der aus einer Batterie gespeist wird, oder über einen Zwischenschritt umgewandelt werden, beispielsweise in einem Brennstoffzellensystem oder bei Betrieb eines Generators zur Erzeugung elektrischer Energie.

Bei einer Erschöpfung des Energievorrats ist es häufig nicht möglich, das Flurförderzeug zu bewegen, da in diesem Fall Bremseinrichtungen automatisch betätigt werden. Eine Ergänzung des Energievorrats ist dadurch nur unter großem Aufwand möglich. Manche Energiespeicher, beispielsweise Batterien, werden durch eine vollständige Entladung auch beschädigt. Die vollständige Entleerung des Energiespeichers ist daher im Betrieb unbedingt zu vermeiden, weshalb es für die Bedienperson wichtig ist, möglichst genau über den im Energiespeicher verbliebenen Energievorrat Bescheid zu wissen. Bei Flüssigkeitstanks verwendet man dazu meist eine Füllstandsanzeige, bei Batterien eine Ladekapazitätsanzeige. Da eine solche Anzeige aber nur die im Speicher vorhandene Energie anzeigt, kann eine Bedienperson, insbesondere wenn sie mit dem Flurförderzeug und den Betriebsanforderungen nicht sehr gut vertraut ist, nur schwer abschätzen, ob der Energievorrat noch ausreicht, um beispielsweise eine bestimmte Transportaufgabe zu erfüllen oder um das Flurförderzeug bis zum Ende einer Arbeitsschicht ohne eine Ergänzung des Vorrats zu betreiben. Insbesondere bei batteriebetriebenen Geräten ist zudem die Anzeige der verbleibenden Kapazität meist auf die volle Ladungskapazität der Batterie bezogen und kann somit bei einem Wechsel der Batterie bei gleichem Anzeigebild unterschiedliche Energiemengen bedeuten.

Aus der DE 202 02 143 U1 ist eine Restleistungsanzeige für eine Batterie eines elektrischen Fahrzeugs bekannt.
Aus der US 5,963,140 A ist ein elektrisches Fahrzeug, insbesondere ein elektrisches Fahrrad, mit einer Anzeige der verbleibenden elektrischen Energie in einer Akkubatterie bekannt.

US 5,656,919 offenbart ein Flurförderzeug mit einem mitgeführten Energiespeicher und mindestens einem daraus mit Energie versorgten Antrieb, wobei eine Vorrichtung zur Anzeige der verbleibenden Betriebszeit bis zur Erschöpfung des Energievorrats des Energiespeichers vorhanden ist, und die anzuzeigende verbleibende Betriebszeit berechenbar ist aus dem Inhalt des Energiespeichers.

Der Erfindung liegt daher die Aufgabe zugrunde, ein Flurförderzeug zu schaffen, das es einer Bedienperson ermöglicht, einfach und zuverlässig die bis zur Erschöpfung des Energiespeichers verbleibenden Betriebsmöglichkeiten abzuschätzen.

Diese Aufgabe wird erfindungsgemäß durch eine Vorrichtung mit den Merkmalen des Anspruchs 1 gelöst. Es ist vorteilhaft, wenn die Anzeige der verbleibenden Betriebszeit durch eine analoge Anzeige, insbesondere ein Balkendiagramm oder eine Zeigerdarstellung, erfolgt. Analoge Anzeigen lassen sich besonders schnell ablesen und lenken daher die Bedienperson nicht unnötig lange von der Bedienung ab.

In einer vorteilhaften Ausgestaltung der Erfindung erfolgt die Anzeige der verbleibenden Betriebszeit durch eine digitale Anzeige, vorzugsweise in Stunden und/oder Minuten. Dies ermöglicht eine besonders genaue Angabe der Restlaufzeit. Es ist besonders zweckmäßig, wenn die anzuzeigende verbleibende Betriebszeit aus dem Inhalt des Energiespeichers und der während einer bestimmten Zeitspanne entnommenen mittleren Leistung berechenbar ist. Dadurch dient die beim typischen Betrieb des Flurförderzeugs benötigte Leistung als Grundlage der Betriebszeitangabe.

In einer zweckmäßigen Ausgestaltung umfasst die Zeitspanne zur Berechnung der mittleren entnommenen Leistung vorzugsweise mehrere Stunden bis wenige Tage und Betriebs- und Stillstandzeiten werden berücksichtigt. Dadurch wird eine besonders genaue Angabe für ängerzeitigen Betrieb erreicht, da der typische Betrieb des Flurförderzeugs, auch unter Berücksichtigung von Zeiten geringer Aktivität oder von Stillstand, als Grundlage der Angabe dient.

In einer weiteren zweckmäßigen Ausgestaltung umfasst die Zeitspanne zur Berechnung der mittleren entnommenen Leistung weniger als eine Stunde, vorzugsweise die letzten 2 Minuten, und vorzugsweise werden nur Betriebszeiten des Flurförderzeugs berücksichtigt. Indem der Zeitraum relativ kurz gewählt und nur die Zeit berücksichtigt wird, in welcher das Flurförderzeug auch tatsächlich betrieben wird, weiß die Bedienperson, wie lange sie das Flurförderzeug unter den augenblicklichen Betriebsbedingungen weiter betreiben kann.
Es ist von besonderem Vorteil, wenn die Zeitspanne, die zur Mittelung der entnommenen Leistung verwendet wird, variierbar ist. Dadurch ist eine Anpassung an die Betriebsgegebenheiten des Flurförderzeugs möglich.
Es ist weiterhin von Vorteil, wenn die anzuzeigende verbleibende Betriebszeit aus dem Inhalt des Energiespeichers und der maximal dem Energiespeicher entnehmbaren Leistung berechenbar ist. Dies ermöglicht eine Abschätzung der Mindestbetriebszeit, die auch bei maximaler Belastung des Flurförderzeugs gewährleistet ist.
In einer zweckmäßigen Ausgestaltung der Erfindung ist die anzuzeigende verbleibende Betriebszeit aus dem Inhalt des Energiespeichers und einem für das Flurförderzeug bei typischen oder standardisierten Betriebsbedingungen ermittelten Energieverbrauch berechenbar. Wird das Flurförderzeug weit gehend entsprechend dieser Bedingungen eingesetzt, ist eine genaue Vorhersage der Betriebszeit mit geringem Aufwand möglich.

Es ist besonders vorteilhaft, dass die Berechnungsweise für die verbleibende Betriebszeit von der Bedienperson frei wählbar ist. Dadurch kann eine an die Bedürfnisse der Bedienperson angepasste Berechnungsweise gewählt werden.
Es ist weiterhin vorteilhaft, wenn die Berechnungsweise für die verbleibende Betriebszeit in Abhängigkeit vom Betriebszustand veränderbar ist. Dadurch kann eine an die Betriebsbedingungen angepasste Berechnungsweise gewählt werden, wodurch eine genauere Anzeige erreicht wird.
Vorteilhafterweise ist zusätzlich oder alternativ zur verbleibenden Betriebszeit die verbleibende Betriebsstrecke anzeigbar. Bei Flurförderzeugen, die im wesentlichen für Transportaufgaben auf langen Wegen verwendet werden und beispielsweise selten Lasten anheben, ist die Angabe der verbleibende Reichweite, beispielsweise auch für eine Rückkehr zu einer Ladestation, für die Bedienperson eine wesentliche Angabe.

Es ist zweckmäßig, wenn bei Unterschreiten einer bestimmten Restbetriebszeit ein Warnsignal auslösbar ist. Dadurch wird die Bedienperson vor der Erschöpfung des Energiespeichers gewarnt und rechtzeitig für eine Ergänzung der Energievorräte sorgen.

In einer zweckmäßigen Ausbildung der Erfindung wird als Energiespeicher eine Batterie verwendet. Batterien sind bei Flurförderzeugen verbreitete Energiequellen mit einfacher Energieversorgung. Der Energieinhalt und die zugeführte beziehungsweise entnommene Energiemenge können einfach und genau bestimmt werden.

In einer weiteren zweckmäßigen Ausgestaltung wird als Energiespeicher ein Tank für flüssige und/oder gasförmige Betriebsstoffe verwendet. Der Betrieb von Flurförderzeugen mit flüssigen oder gasförmigen Betriebsstoffen ist weit verbreitet und ohne aufwändige Infrastruktur möglich.

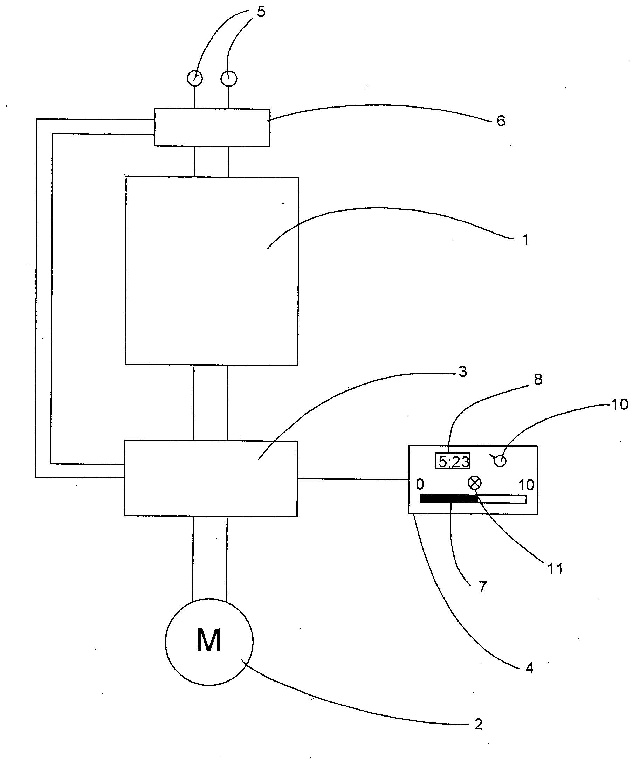

Weitere Vorteile und Einzelheiten der Erfindung werden anhand des in der schematischen Figur dargestellten Ausführungsbeispiels näher erläutert. Die Figur zeigt einen schematischen Verdrahtungsplan für ein Flurförderzeug mit einem als Batterie 1 ausgebildeten Energiespeicher, einem als Elektromotor 2 ausgebildeten Antrieb und einer elektronischen Steuerungseinheit 3, die mit einer Anzeigeeinheit 4 in Wirkverbindung steht. Weitere typische Komponenten eines Flurförderzeugs nach dem Stand der Technik, beispielsweise Bedienelemente, weitere Antriebe, elektrische Verbraucher oder Sensoren, die zum Verständnis des Ausführungsbeispiels nicht erforderlich sind, sind nicht dargestellt.

Der Batterie 1 kann elektrische Energie entweder über die Anschlussklemmen 5 für ein hier nicht dargestelltes Ladegerät oder aus der Energierückgewinnung vom Elektromotor 2 zugeführt werden. Der Ladezustand der Batterie 1 wird über die Steuerungseinheit 3 überwacht. Beispielweise wird die über ein Ladegerät zugeführte Energiemenge über eine Messvorrichtung 6 bestimmt. Die an den Elektromotor 2 gelieferte beziehungsweise bei Energierückgewinnung von diesem abgegebene Energie wird ebenfalls in der Steuerungseinheit 3, beispielweise durch Messung des Stroms zwischen der Batterie 1 und dem Elektromotor 2, erfasst. Dadurch ist der Ladezustand der Batterie 1 stets bekannt. Selbstverständlich sind auch andere Verfahren und Vorrichtungen zur Bestimmung des Ladezustandes der Batterie 1 nach dem Stand der Technik denkbar.

Durch die Messung des Stroms zwischen Batterie 1 und Elektromotor 2 wird auch die abgegebene Leistung bestimmt und daraus die über eine bestimmte Zeitspanne vom Elektromotor 2 aufgenommene mittlere Leistung berechnet. Handelt es sich dabei um einen längeren Zeitraum, beispielsweise Tage oder Wochen, zumindest aber einige Stunden, beispielsweise eine Arbeitsschicht, so ist der Leistungsbedarf des Flurförderzeugs bei seinem typischen Einsatzspektrum recht gut bekannt. Auch die dabei typischerweise anfallenden Betriebspausen werden auf diese Weise berücksichtigt. Der Quotient aus mittlerer Leistungsaufnahme und Energieinhalt des Energiespeichers 1 gibt somit direkt die bei dieser Leistungsaufnahme verbleibende Restlaufzeit. Die Restlaufzeit wird in der Anzeigeeinheit 4 an die Bedienperson übermitttelt. Dies kann auf verschiedene Weise erfolgen, beispielsweise akustisch durch einen Hinweiston oder gesprochene Hinweise, im vorliegenden Ausführungsbeispiel ist jedoch eine optische Anzeige 7 vorgesehen, die die Restlaufzeit in Form eines Balkendiagramms darstellt. Die optische Anzeige 7 lenkt die Bedienperson nicht von der Arbeit ab und ist schnell von dieser zu erfassen. Andere gebräuchliche Anzeigeformen, beispielsweise über eine Zeigerdarstellung oder eine Reihe von gleich- oder verschiedenfarbigen Leuchtdioden, sind ebenfalls denkbar. Solche Darstellungen sind zwar gut erfassbar, bieten aber keine sehr große Ablesegenauigkeit. Zusätzlich ist daher eine digitale Anzeige 8 vorgesehen, die die Restlaufzeit in Stunden und Minuten angibt. Es kann auch eine bereits für andere Anzeigen vorgesehene Vorrichtung verwendet werden, die die Bedienperson bei Bedarf auf die gewünschte Zeitanzeige umschalten kann.

Ist die Zeitspanne zur Mittelung der vom Elektromotor 2 aufgenommenen Leistung relativ kurz, beispielsweise im Bereich weniger Minuten bis zu einer Stunde, so gibt die berechnete Restlaufzeit die Zeitspanne an, für die das Flurförderzeug bei der aktuellen Belastung weiterbetrieben werden kann. Dies ist insbesondere bei stark wechselnder Beanspruchung des Flurförderzeugs hilfreich, da die Bedienperson so genau weiß, wie lange das Flurförderzeug bei der gerade geforderten Belastung noch betrieben werden kann. Insbesondere bei der Berechnung auf der Grundlage einer kurzen Zeitspanne werden vorzugsweise nur die Betriebszeiten und nicht die Stillstandszeiten des Flurförderzeugs berücksichtigt, da somit die beim Dauerbetrieb mögliche Restbetriebszeit ermittelt wird.

Die Zeitspanne zur Mittelung der vom Elektromotor 2 aufgenommenen Leistung kann variiert werden. Diese Einstellung kann durch einen Servicetechniker bei einer Wartung des Flurförderzeugs vorgenommen werden, es sind aber auch Ausführungsformen möglich, bei denen dies über ein Bedienelement durch die Bedienperson vornehmbar ist. Dadurch kann eine Anpassung der Zeitspanne an die typischen Betriebsbedingungen des Flurförderzeugs vorgenommen werden. Wechseln sich jeweils längere Phasen starker und schwacher Beanspruchung ab, kann eine Mittelung über einen Zeitraum, der beide Phasen einschließt, bei starker Beanspruchung zu einer Überschätzung der Restlaufzeit führen.

Eine weitere Möglichkeit zur Berechnung der Restlaufzeit besteht darin, den Quotienten aus der maximal möglichen Leistungsaufnahme des Flurförderzeugs und dem Energieinhalt des Energiespeichers 1 zu bilden. Dies gibt die Restlaufzeit bei Dauerbetrieb mit maximal möglicher Belastung an und liefert damit die kürzeste mögliche Restlaufzeit. Da die Maximalbelastung in der Praxis nicht als Dauerbelastung realisiert wird, bleibt bei dieser Berechnungsmethode noch eine ausreichende Sicherheitsreserve zum Betrieb des Flurförderzeugs, wenn die Anzeige bereits ein Ende der Laufzeit signalisiert.

In einer weiteren Ausführungsform wird die Restlaufzeit als Quotient aus einer für das Flurförderzeug bei typischen oder standardisierten Betriebsbedingungen ermittelten Leistungsaufnahme und der Kapazität der Batterie 1 berechnet. Diese Leistungsaufnahme kann beispielsweise herstellerseitig in Versuchen oder in einem Probebetrieb an der Einsatzstelle ermittelt werden. Da bei dieser Ausführungsform keine Bestimmung des Stroms, der von der Batterie1 zum Elektromotor 2 fließt, und somit keine Berechnung der mittleren Leistung nötig ist, kann die anzugebende Restlaufzeit bei diesem Verfahren relativ einfach ermitttelt werden. Sinnvoll kann diese Methode auch nach längeren Stillstandszeiten des Flurförderzeugs eingesetzt werden, um einen Schätzwert für die Restbetriebszeit zu erhalten, wenn anzunehmen ist, dass sich die Betriebsbedingungen verändert haben.

Die Bedienperson kann im vorliegenden Ausführungsbeispiel die Berechnungsmethode zur Ermittlung der Restlaufzeit über den Schalter 10 selbst auswählen. Dadurch kann die Bedienperson die für die Betriebsanforderungen und ihre Bedürfnisse optimale Methode verwenden. Diese Umschaltung ist jederzeit möglich, um beispielsweise die Ergebnisse der unterschiedlichen Methoden vergleichen zu können. Eine Anzeige der gewählten Methode, beispielsweise durch die Stellung des Schalters 10 oder eine Darstellung in der Anzeigeeinheit 4, ermöglicht es jederzeit zu erkennen, wie die Restlaufzeit berechnet wird. Es besteht auch die Möglichkeit, die Berechnungsweise automatisch in Abhängigkeit vom Betriebszustand zu verändern. Nach einer längeren Stillstandszeit wird so beispielsweise selbsttätig eine Berechnung nach der bei typischen oder standardisierten Betriebsbedingungen ermittelten Leistungsaufnahme vorgenommen, da anzunehmen ist, dass sich die Betriebsbedingungen verändert haben. Nach einer gewissen Betriebszeit kann dann die Umschaltung auf eine Berechnung aus der mittleren tatsächlichen Leistungsaufnahme des Antriebs 2 erfolgen. Die zur Mittelung verwendete Zeitspanne, kann dabei ebenfalls automatisch angepasst werden und beispielsweise bei längeren Phasen großer Leistungsaufnahme, die von ebenfalls längeren Pausen unterbrochen werden, so gewählt werden, dass die Pausen nicht berücksichtigt werden, um sicher zu gehen, dass die Anzeigen 7,8 während der Phasen großer Leistungsaufnahme keine zu großen Werte für die Restlaufzeit anzeigen.

Die Bedienperson wird durch ein Warnsignal auf das Unterscheiten einer bestimmten Restbetriebszeit hingewiesen. Im vorliegenden Ausführungsbeispiel ist dazu in der Anzeigeeinheit eine Wamlampe 11 vorgesehen, es sind jedoch auch andere Ausführungsformen nach dem Stand der Technik, beispielweise ein akustisches Signal oder ein Hinweis auf einem Anzeigebildschirm, möglich.

Es sind selbstverständlich auch andere Ausführungen des erfindungsgemäßen Flurförderzeugs nach dem Stand der Technik möglich, beispielsweise mit einem Verbrennungsmotor, der entweder direkt mit einem Fahrantrieb in Wirkverbindung steht oder elektrische oder hydraulische Energie für Fahr- und/oder Hubantriebe zur Verfügung stellt. Auch die Verwendung eines Brennstoffzellensystems ist denkbar, das seine Energie beispielsweise aus einem Tank für Wasserstoff oder Methanol bezieht. Bei einem System, das flüssige oder gasförmige Brennstoffe verwendet, wird der Energieinhalt des Tanks beispielsweise über eine Füllstandsmessung und die entnommene Energie über die Messung der entnommenen Brennstoffmenge ermittelt. Bei einer Umsetzung in elektrische Energe ist auch die Messung des gelieferten Stroms denkbar. Können unterschiedliche Brennstoffe verwendet werden, ist bei der Berechnung der Restlaufzeit unter Umständen eine Anpassung an den unterschiedlichen spezifischen Energiegehalt der unterschiedlichen Brennstoffe vorzunehmen. Bei einem Flurförderzeug, das über keinen aus dem Energiespeicher versorgten Hubantrieb verfügt oder bei dem dieser selten eingesetzt wird, weil das Flurförderzeug beispielsweise vorwiegend für Schleppbetrieb verwendet wird, ist alternativ oder zusätzlich zur Anzeige der Restbetriebszeit ein Restlaufweg anzeigbar. Dazu kann, beispielweise über Drehzahlsensoren an einem Antriebsmotor oder an einem Lauf- oder Antriebsrad des Flurförderzeugs, der Laufweg und die mittlere Geschwindigkeit ermittelt werden und das Produkt aus mittlerer Geschwindigkeit und Restlaufzeit als Restlaufweite angegeben werden.

## Patentansprüche

1. Flurförderzeug mit einem mitgeführten Energiespeicher (1) und mindestens einem daraus mit Energie versorgten Antrieb (2), wobei
eine Vorrichtung (4) zur Anzeige der verbleibenden Betriebszeit bis zur Erschöpfung des Energievorrats des Energiespeichers (1) vorhanden ist, und
die anzuzeigende verbleibende Betriebszeit berechenbar ist aus dem Inhalt des Energiespeichers (1) und i) der während einer bestimmten Zeitspanne entnommenen mittleren Leistung, oder ii) der maximal dem Energiespeicher (1) entnehmbaren Leistung,
wobei die Berechnungsweise für die verbleibende Betriebszeit von der Bedienperson frei wählbar ist.

2. Flurförderzeug nach Anspruch 1, **dadurch gekennzeichnet, dass** die Anzeige der verbleibenden Betriebszeit durch eine analoge Anzeige (7), insbesondere ein Balkendiagramm oder eine Zeigerdarstellung, erfolgt.

3. Flurförderzeug nach einem der Ansprüche 1 oder 2, **dadurch gekennzeichnet, dass** die Anzeige der verbleibenden Betriebszeit durch eine digitale Anzeige (8), vorzugsweise in Stunden und/oder Minuten, erfolgt.

4. Flurförderzeug nach einem der Ansprüche 1 bis 3, **dadurch gekennzeichnet, dass** die Zeitspanne zur Berechnung der mittleren entnommenen Leistung vorzugsweise mehrere Stunden bis wenige Tage umfasst und Betriebs- und Stillstandzeiten berücksichtigt werden.

5. Flurförderzeug nach einem der Ansprüche 1 bis 3, **dadurch gekennzeichnet, dass** die Zeitspanne zur Berechnung der mittleren entnommenen Leistung weniger als eine Stunde, vorzugsweise die letzten 2 Minuten, umfasst und vorzugsweise nur Betriebszeiten des Flurförderzeugs berücksichtigt werden.

6. Flurförderzeug nach einem der Ansprüche 1 bis 5, **dadurch gekennzeichnet, das** die Zeitspanne, die zur Mittelung der entnommenen Leistung verwendet wird, variierbar ist.

7. Flurförderzeug nach einem der Ansprüche 1 bis 6, **dadurch gekennzeichnet, dass** die anzuzeigende verbleibende Betriebszeit aus dem Inhalt des Energiespeichers (1) und einem für das Flurförderzeug bei typischen oder standardisierten Betriebsbedingungen ermittelten Energieverbrauch berechenbar ist.

8. Flurförderzeug nach einem der Ansprüche 1 bis 7, **dadurch gekennzeichnet, dass** die Berechnungsweise für die verbleibende Betriebszeit in Abhängigkeit vom Betriebszustand veränderbar ist.

9. Flurförderzeug nach einem der Ansprüche 1 bis 8, **dadurch gekennzeichnet, dass** zusätzlich zur verbleibenden Betriebszeit die verbleibende Betriebsstrecke anzeigbar ist.

10. Flurförderzeug nach einem der Ansprüche 1 bis 9, **dadurch gekennzeichnet, dass** bei Unterschreiten einer bestimmten Restbetriebszeit ein Warnsignal auslösbar ist.

11. Flurförderzeug nach einem der Ansprüche 1 bis 10, **dadurch gekennzeichnet, dass** als Energiespeicher (1) eine Batterie verwendet wird.

12. Flurförderzeug nach einem der Ansprüche 1 bis 11, **dadurch gekennzeichnet, dass** als Energiespeicher (1) ein Tank für flüssige und/oder gasförmige Betriebsstoffe verwendet wird.

## Claims

1. Industrial truck having an on-board energy store (1) and at least one drive (2) supplied with energy therefrom, wherein
there is an apparatus (4) for displaying the remaining operating time until the energy reserve of the energy store (1) is exhausted, and
the remaining operating time to be displayed can be calculated from the content of the energy store (1) and i) the average power taken during a particular period or ii) the maximum power which can be taken from the energy store (1),
wherein the calculation method for the remaining operating time can be freely selected by the operator.

2. Industrial truck according to Claim 1, **characterized in that** the remaining operating time is displayed by means of an analogue display (7), in particular a bar chart or a pointer representation.

3. Industrial truck according to either of Claims 1 and 2, **characterized in that** the remaining operating time is displayed by means of a digital display (8), preferably in hours and/or minutes.

4. Industrial truck according to one of Claims 1 to 3, **characterized in that** the period for calculating the average power taken preferably comprises several hours to a few days, and operating times and downtimes are taken into account.

5. Industrial truck according to one of Claims 1 to 3, **characterized in that** the period for calculating the average power taken comprises less than one hour, preferably the last two minutes, and only operating times of the industrial truck are preferably taken into account.

6. Industrial truck according to one of Claims 1 to 5, **characterized in that** the period which is used to average the power taken can be varied.

7. Industrial truck according to one of Claims 1 to 6, **characterized in that** the remaining operating time to be displayed can be calculated from the content of the energy store (1) and an energy consumption determined for the industrial truck under typical or standardized operating conditions.

8. Industrial truck according to one of Claims 1 to 7, **characterized in that** the calculation method for the remaining operating time can be changed on the basis of the operating state.

9. Industrial truck according to one of Claims 1 to 8, **characterized in that** the remaining operating distance can be displayed in addition to the remaining operating time.

10. Industrial truck according to one of Claims 1 to 9, **characterized in that** a warning signal can be triggered if a particular remaining operating time is undershot.

11. Industrial truck according to one of Claims 1 to 10, **characterized in that** a battery is used as the energy store (1).

12. Industrial truck according to one of Claims 1 to 11, **characterized in that** a tank for liquid and/or gaseous fuels is used as the energy store (1).

## Revendications

1. Chariot élévateur sur lequel sont embarqués au moins une réserve d'énergie (1) et au moins un entraînement (2) alimenté en énergie par la réserve,
un ensemble (4) d'affichage du temps de fonctionnement restant jusqu'à épuisement de l'énergie conservée dans la réserve d'énergie (1) étant prévu et
le temps de fonctionnement restant à afficher pouvant être calculé à partir du contenu de la réserve d'énergie (1) et i) de l'énergie prélevée en moyenne pendant une durée prédéterminée ou ii) de l'énergie maximale qui peut être prélevée dans la réserve d'énergie (1),
le mode de calcul du temps de fonctionnement restant pouvant être sélectionné librement par l'opérateur.

2. Chariot élévateur selon la revendication 1, **caractérisé en ce que** l'affichage du temps de fonctionnement restant s'effectue par un affichage analogique (7) et en particulier un histogramme ou une représentation par aiguille.

3. Chariot élévateur selon l'une des revendications 1 ou 2, **caractérisé en ce que** l'affichage du temps de fonctionnement restant s'effectue par un affichage numérique (8) de préférence en heures et/ou minutes.

4. Chariot élévateur selon l'une des revendications 1 à 3, **caractérisé en ce que** la durée utilisée pour le calcul de l'énergie prélevée en moyenne comprend de préférence de plusieurs heures à quelques jours, les temps de fonctionnement et d'arrêt étant pris en compte.

5. Chariot élévateur selon l'une des revendications 1 à 3, **caractérisé en ce que** la durée utilisée pour le calcul de l'énergie prélevée en moyenne comprend moins d'une heure et de préférence les 2 dernières minutes, de préférence seuls les temps de fonctionnement du chariot élévateur étant pris en compte.

6. Chariot élévateur selon l'une des revendications 1 à 5, **caractérisé en ce que** la durée utilisée pour le calcul de l'énergie prélevée en moyenne peut être modifiée.

7. Chariot élévateur selon l'une des revendications 1 à 6, **caractérisé en ce que** le temps de fonctionnement restant à afficher peut être calculé à partir du contenu de la réserve d'énergie (1) et d'une consommation en énergie du chariot élévateur typique ou déterminée à partir des conditions de fonctionnement standardisées.

8. Chariot élévateur selon l'une des revendications 1 à 7, **caractérisé en ce que** le mode de calcul du temps de fonctionnement restant peut être modifié en fonction de l'état de fonctionnement.

9. Chariot élévateur selon l'une des revendications 1 à 8, **caractérisé en ce que** le parcours d'utilisation restant peut être affiché en plus du temps d'utilisation restant.

10. Chariot élévateur selon l'une des revendications 1 à 9, **caractérisé en ce que** lorsque la durée résiduelle de fonctionnement définie n'est pas atteinte, un signal d'avertissement peut être déclenché.

11. Chariot élévateur selon l'une des revendications 1 à 10, **caractérisé en ce que** la réserve d'énergie (1) utilisée est une batterie.

12. Chariot élévateur selon l'une des revendications 1 à 11, **caractérisé en ce que** la réserve d'énergie (1) utilisée est un carburant liquide et/ou un carburant gazeux.
